# FASCICULE DE BREVET EUROPEEN

(11) **EP 1 556 593 B1**
(45) Date de publication et mention de la délivrance du brevet: **27.12.2006**
(21) Numéro de dépôt: 03778404.8
(22) Date de dépôt: 17.10.2003
(51) Int. Cl.: F02B 19/16

(54) **DISPOSITIF D'ALLUMAGE A PRECHAMBRE REVETUE D'UN REVETEMENT REFRACTAIRE POUR UN MOTEUR A COMBUSTION INTERNE, ET ALLUMEUR A PRECHAMBRE.**
VORKAMMERZÜNDEINRICHTUNG MIT EINER FEUERFESTEN BESCHICHTUNG FÜR EINE BRENNKRAFTMASCHINE
PRECOMBUSTION CHAMBER IGNITION DEVICE COATED WITH A REFRACTORY COAT FOR INTERNAL COMBUSTION ENGINE, AND PRECOMBUSTION CHAMBER IGNITER

(30) Priorité: 18.10.2002 FR 0213019
(43) Date de publication de la demande: 27.07.2005
(73) Titulaire: Peugeot Citroen Automobiles SA, 92200 Neuilly sur Seine (FR)
(72) Inventeur: ROBINET, Cyril, 91430 Igny (FR); TOURTEAUX, Nicolas, 92500 Rueil Malmaison (FR)
(74) Mandataire: Berger, Helmut
(86) Numéro de dépôt international: PCT/FR2003/003084
(87) Numéro de publication internationale: WO 2004/036014

(56) Documents cités:
- DE-A- 2 908 859
- FR-A- 2 781 840
- US-A- 4 237 845
- US-A- 4 394 855
- US-A- 4 738 227

## Description

La présente invention se rapporte à un dispositif d'allumage pour moteur à combustion interne, ainsi qu'un allumeur à préchambre.

Le dispositif d'allumage selon l'invention comprend un allumeur à préchambre qui peut se visser en lieu et place d'une bougie d'allumage classique sans modification de la culasse du moteur à combustion interne (diamètre inférieur ou égal à 14 mm), les moyens d'inflammation d'un mélange comburant et carburant étant contenus dans une préchambre définie par un corps dont la tête est pourvue de passages.

Ainsi, lorsque l'allumeur à préchambre est monté dans la culasse du moteur, la préchambre de l'allumeur est séparée de la chambre de combustion principale du moteur par la tête du corps de préchambre et communique avec la chambre de combustion principale par l'intermédiaire des passages ménagés dans cette tête.

L'allumeur à préchambre peut éventuellement être muni de moyens permettant d'introduire directement les réactifs dans la préchambre.

Le brevet US 4,926,818 décrit un dispositif et un procédé de génération de jets pulsés destinés à former des poches de combustion tourbillonnaire. Le dispositif décrit comprend une chambre principale contenant un mélange combustible principal dans laquelle se déplace un piston et une préchambre recevant des réactifs et communiquant avec la chambre principale par des orifices pratiqués dans une paroi. L'allumage des réactifs dans la préchambre produits des jets de gaz en combustion, qui enflamment le mélange principal contenu dans la chambre principale par convection du front de flamme.

La demande de brevet FR 2 781 840 décrit un dispositif d'allumage de moteur à combustion interne comprenant :
- une chambre principale destinée à contenir un mélange combustible principal, et munie d'un système de compression dudit mélange,
- une préchambre destinée à recevoir des réactifs et communiquant avec la chambre principale par des orifices pratiqués dans une paroi séparant la chambre principale de la préchambre,
- un système d'allumage des réactifs contenus dans la préchambre.

Dans un tel dispositif, qui donne globalement satisfaction, les orifices sont de faible diamètre et aptes à empêcher le passage d'un front de flamme tout en permettant le passage des composés instables provenant de la combustion des réactifs contenus dans la préchambre. Le système de compression et l'ensemencement du mélange principal en les composés instables permettent une auto-inflammation en masse du mélange initial.

La demande de brevet FR 2 810 692 concerne également un dispositif d'allumage d'un moteur à combustion interne comportant une préchambre de forme générale cylindrique, analogue à celle décrite dans la demande FR 2 781 840, mais dont les passages communiquant avec la chambre de combustion principale sont circonscrits par une courbe circulaire passant par les centres de passage les plus externes, le diamètre de cette courbe circulaire étant dans un rapport inférieur ou égal à ½ avec le diamètre de la préchambre cylindrique. Cette disposition permet le fonctionnement du moteur avec une faible quantité d'air comburant, en particulier lorsque la composition du mélange air-carburant dans la chambre principale est stoechiométrique, pour des raisons de dépollution avec un catalyseur trois voies.

Ces dispositifs peuvent encore être améliorés.

En particulier, la présente invention concerne un dispositif d'allumage pour moteur à combustion interne qui peut présenter les avantages suivants :
- augmentation de l'efficacité de la combustion dans la préchambre,
- amélioration du fonctionnement du moteur aux faibles charges, et de la stabilité du fonctionnement du moteur au point de ralenti.

A cet effet, l'invention concerne un dispositif d'allumage d'un moteur à combustion interne, comprenant :
- une chambre principale destinée à contenir un mélange combustible principal, et munie d'un système de compression dudit mélange,
- un allumeur comprenant une préchambre destinée à recevoir des réactifs et un système d'allumage des réactifs contenus dans la préchambre, ladite préchambre étant définie par un corps de préchambre ayant une tête comportant au moins un passage, ladite tête du corps de préchambre séparant la préchambre de la chambre principale et faisant communiquer la préchambre et la chambre principale par l'intermédiaire du ou des passages.

Selon l'invention, la tête est revêtue au moins partiellement extérieurement d'un revêtement d'au moins un matériau réfractaire.

Par matériau réfractaire on entend un matériau non métallique, mais pouvant contenir un constituant métallique, dont la résistance pyroscopique est équivalente à 1500°C.

De préférence, le corps de préchambre est revêtu au moins partiellement intérieurement d'un revêtement d'au moins un matériau réfractaire.

De préférence encore, le ou les passages sont revêtus d'un revêtement d'au moins un matériau réfractaire.

Selon un mode de réalisation préféré de l'invention, le revêtement est un revêtement nano-structuré, c'est-à-dire dont la taille des grains est supérieure ou égale à 1 nm et inférieure à 1 000 nm.

Le revêtement réfractaire selon l'invention peut consister en une seule couche d'au moins un matériau réfractaire ou en deux couches d'au moins un matériau réfractaire.

Le ou les matériaux réfractaires peuvent être tout type de matériaux réfractaires couramment utilisés pour résister aux hautes températures et qui sont aptes à résister aux contraintes de pression dues au fonctionnement du dispositif d'allumage.

On peut citer en particulier les nitrures, les borures, les siliciures, les carbures, les alliages de zirconium, d'yttrium, de titane et de bore, les oxydes, de préférence les oxydes d'aluminium, de titane, de fer, de silicium, de cérium, de manganèse et de zirconium, ainsi que les zircones ayant subies l'addition d'au moins un oxyde métallique choisi parmi les oxydes de calcium, de magnésium, d'yttrium, d'hafnium et de terres rares.

Par terres rares, on entend l'ensemble des éléments dont le numéro atomique est compris entre 57 (lanthane) et 71 (lutétium).

De préférence, le ou les matériaux réfractaires sont choisis parmi Al₂O₃, SiO₂, CeO₂, MnO₂, ZrO₂, ZrY, Zr et Y étant dans des proportions stoechiométriques ou non, et TiB₂, de préférence parmi Al₂O₃, ZrY, Zr et Y étant dans des proportions stoechiométriques ou non, et TiB₂.

De préférence, l'épaisseur du revêtement du ou des matériaux réfractaires est comprise entre 0,5 et 100 µm, de préférence encore entre 1 et 50 µm.

Le dépôt du revêtement réfractaire selon l'invention peut se faire par un procédé en phase liquide, la phase liquide possédant des propriétés de mouillage et de tension superficielle adaptées.

Le dépôt du revêtement réfractaire selon l'invention peut encore se faire par l'utilisation de poudre, par projection thermique (par arc électrique ou par plasma), par dépôt chimique en phase vapeur (CVD), par dépôt physique en phase vapeur (PVD) ou encore par électro-déposition.

Le revêtement d'au moins un matériau réfractaire selon l'invention permet d'assurer un effet de barrière thermique.

En particulier, le revêtement réfractaire sur la face externe de la tête du corps de préchambre permet de limiter les transferts thermiques entre le mélange principal en combustion et le corps de la préchambre.

Le revêtement réfractaire sur la paroi interne du corps de préchambre permet de limiter les transferts thermiques entre les réactifs en combustion dans la préchambre et le corps de la préchambre.

La limitation des transferts thermiques vers le corps de la préchambre a pour effet d'améliorer la combustion dans la préchambre.

Le revêtement réfractaire selon l'invention a encore pour qualité de bien accrocher sur le substrat que représente le corps de préchambre, qui est généralement un alliage de cuivre.

De plus, le revêtement réfractaire selon l'invention permet de diminuer ou d'éviter l'adhérence des composés issus de la combustion des réactifs dans la préchambre, sur les parois du corps de préchambre, de la tête ou des passages.

Dans le cas d'un revêtement bicouche, la fonction de non-adhérence des composés issus de la combustion est assurée par la couche supérieure, et la fonction de barrière thermique est assurée par la couche inférieure.

Enfin, la faible épaisseur et la structure du revêtement réfractaire selon l'invention permet d'éviter des contraintes de dilatation différentielle trop importantes.

Ainsi, on améliore le fonctionnement du moteur aux faibles charges et la stabilité aux ralentis.

De tels revêtements réfractaires conviennent tout particulièrement pour les allumeurs à préchambre destinés à être utilisés avec des moteurs à combustion interne fortement suralimentés, c'est à dire ayant une Pression Moyenne Effective supérieure ou égale à 13 bars.

Selon un premier mode de réalisation, l'inflammation du mélange principal contenu dans la chambre principal se fait par convection du front de flamme issu de l'allumage des réactifs contenus dans la préchambre.

Dans ce cas, le ou les passages sont de préférence de forme cylindrique et de diamètre supérieur à 1 mm.

Selon un second mode de réalisation, le ou les passages sont aptes à empêcher la propagation d'un front de flamme tout en permettant la propagation de composés instables provenant de la combustion des réactifs contenus dans la préchambre, le système de compression de la chambre principale et l'ensemencement du mélange principal en lesdits composés instables permettant une auto-inflammation en masse du mélange principal.

L'auto-inflammation dans un large volume permet une montée en pression très rapide, une diminution du cliquetis et une bonne répétabilité.

Dans ce cas, le ou lesdits passages sont de préférence de forme cylindrique et de diamètre inférieur ou égal à 1 mm.

De préférence encore, le ou lesdits passages ont une longueur inférieure ou égale à leur diamètre. Par longueur, on entend la dimension des passages selon une direction perpendiculaire à la surface de la paroi de séparation. De cette manière, le moins possible de composés instables sont piégés aux parois.

Généralement, le nombre de passage(s) est compris entre 1 et 20, de préférence entre 3 et 15.

Dans le cas de l'auto-inflammation du mélange par ensemencement du mélange principal en composés instables, selon un mode de réalisation préféré :
- la partie supérieure du corps de préchambre, non attenante à la chambre principale, a la forme d'un cylindre de diamètre intérieur Φ, et
- la tête du corps de préchambre comprend plusieurs passages, lesdits passages étant circonscrits par une courbe circulaire de diamètre d₂ passant par les centres des passages les plus extérieurs, le rapport d₂/Φ étant inférieur ou égal à 0,5.

De préférence, le rapport d₂/ Φ est inférieur ou égal à 1/3.

De manière avantageuse, le centre de la courbe passant par les centres des passages les plus extérieurs est situé sur l'axe de symétrie de la préchambre.

Mais selon un autre mode de réalisation, le centre de la courbe passant par les centres des passages les plus extérieurs peut être situé à une distance d₃ de l'axe de symétrie de la préchambre, égale ou supérieure au quart du diamètre Φ de la préchambre. Cette configuration permet d'orienter préférentiellement les jets de flammes ou de composés instables vers une zone particulière de la chambre de combustion, en fonction de la position dudit centre de la courbe par rapport à l'axe de symétrie de la préchambre.

L'invention concerne encore un allumeur pour moteur à combustion interne comprenant une préchambre définie par un corps de préchambre ayant une tête munie d'au moins un passage, la préchambre étant destinée à contenir un mélange combustible, et un système d'allumage du mélange combustible contenu dans la préchambre, la tête étant revêtue au moins partiellement extérieurement d'un revêtement d'au moins un matériau réfractaire.

De préférence, le corps de préchambre est revêtu au moins partiellement intérieurement d'un revêtement d'au moins un matériau réfractaire.

Le ou les passages de la tête peuvent également être revêtus d'un revêtement d'au moins un matériau réfractaire.

De préférence, le ou les matériaux réfractaires sont choisis parmi les nitrures, les borures, les siliciures, les carbures, les alliages de zirconium, d'yttrium, de titane et de bore, les oxydes, de préférence les oxydes d'aluminium, de titane, de fer, de silicium, de cérium, de manganèse et de zirconium, et les zircones ayant subies l'addition d'au moins un oxyde métallique choisi parmi les oxydes de calcium, de magnésium, d'yttrium, d'hafnium et de terres rares.

Des matériaux réfractaires préférés sont par exemple Al₂O₃, SiO₂, CeO₂, MnO₂, ZrO₂, ZrY, Zr et Y étant dans des proportions stoechiométriques ou non, et TiB₂, de préférence Al₂O₃, ZrY, Zr et Y étant dans des proportions stoechiométriques ou non, et TiB₂.

De préférence, l'épaisseur du revêtement est comprise entre 0,5 et 100 µm, de préférence entre 1 et 50 µm.

L'invention sera mieux comprise et d'autres buts, avantages et caractéristiques de celle-ci apparaîtront plus clairement à la lecture de la description qui suit, faite au regard des dessins annexés.

La Figure 1 représente une vue schématique, partiellement en coupe, d'un dispositif d'allumage comportant un allumeur à préchambre selon l'invention.

La Figure 2 représente un agrandissement de la Figure 1.

La Figure 3 représente une vue schématique en coupe verticale du corps de préchambre d'un allumeur selon l'invention.

La Figure 4 est une vue de dessous de la tête d'un corps de préchambre d'un allumeur selon l'invention.

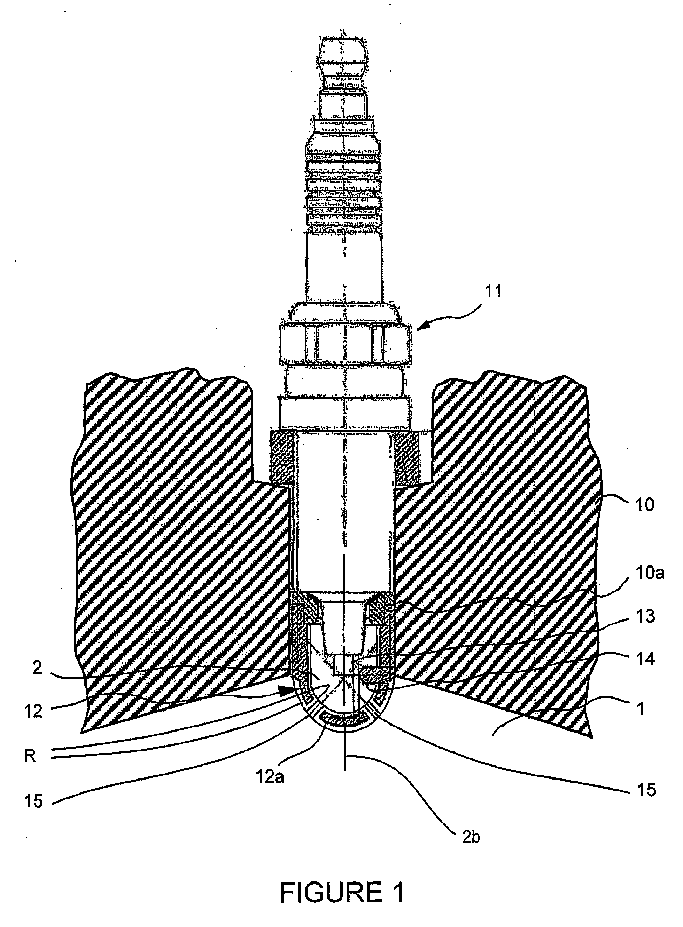

Un cylindre d'un moteur à combustion interne, représenté sur la Figure 1, comporte une chambre principale 1 délimitée par une chemise (non représentée) et fermée supérieurement par une culasse 10. Comme cela est classique, la chambre principale 1 contient un piston (non représenté) actionné en translation par une bielle (non représentée).

Un allumeur 11 à préchambre selon l'invention est fixé dans la culasse 10 de manière à être attenant à la chambre principale 1, par exemple par vissage dans un taraudage 10a de la culasse 10.

L'allumeur 11 comporte un corps de préchambre 12, de forme générale tubulaire, comprenant une tête 12a, de préférence ayant la forme d'une calotte sphérique, définissant une préchambre 2.

La tête 12a du corps de préchambre 12 constitue une paroi de séparation entre la chambre principale 1 et la préchambre 2. La tête 12a fait communiquer la préchambre 2 avec la chambre principale 1 par l'intermédiaire de passages 15.

Selon le mode de réalisation représenté sur les Figures 1, 2 et 3, la paroi interne du corps de préchambre 12, la paroi externe de la tête 12a et les parois des passages 15 sont revêtus d'un revêtement (R) d'au moins un matériau réfractaire.

Généralement, la préchambre 2 a un volume compris entre 0,2 cm³ et 2 cm³, de préférence compris entre 0,5 cm³ et 1,5 cm³.

En général, le rapport SN entre la somme des sections des passages 15 de la préchambre et le volume de la préchambre est compris entre 10⁻³ mm⁻¹ et 5.10⁻² mm⁻¹.

Facultativement, l'allumeur peut en outre comporter une arrivée (non représentée) permettant d'alimenter la préchambre 2 en un mélange de réactifs air-carburant constitué en amont ou d'introduire du carburant, l'air étant mélangé au carburant dans la préchambre 2.

La préchambre est munie d'un système d'allumage comprenant une électrode centrale 13 et une électrode de masse 14.

Lorsque l'inflammation du mélange principal se fait par convection du front de flamme en provenance de la préchambre, les passages 15 ont de préférence un diamètre supérieur à 1 mm.

Lorsque l'on souhaite empêcher, lors de l'allumage, la propagation d'un front de flamme tout en permettant la propagation de composés instables (allumage du mélange principal par auto-inflammation), les passages 15 ont alors un diamètre faible, généralement inférieur à 1 mm, et, avantageusement, une longueur inférieure à leur diamètre.

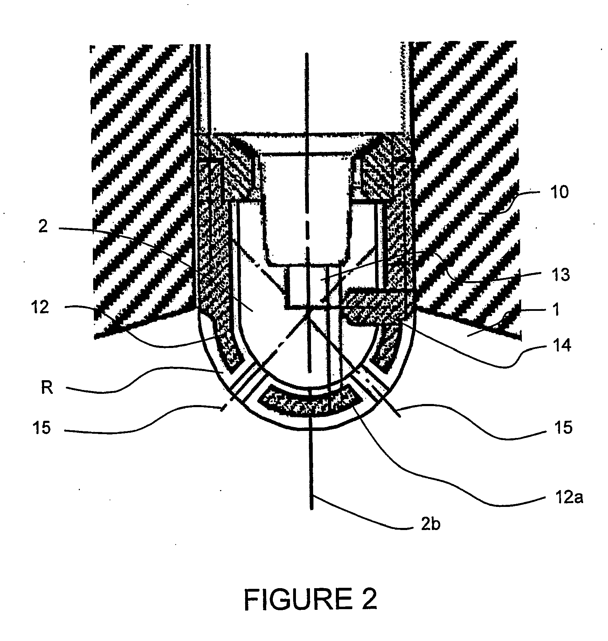

Dans le cas de l'auto-inflammation du mélange principal, comme le montre la Figure 2, les passages 15 appartiennent avantageusement à un cercle de diamètre d₂ correspondant sensiblement à la moitié du diamètre Φ de la préchambre.

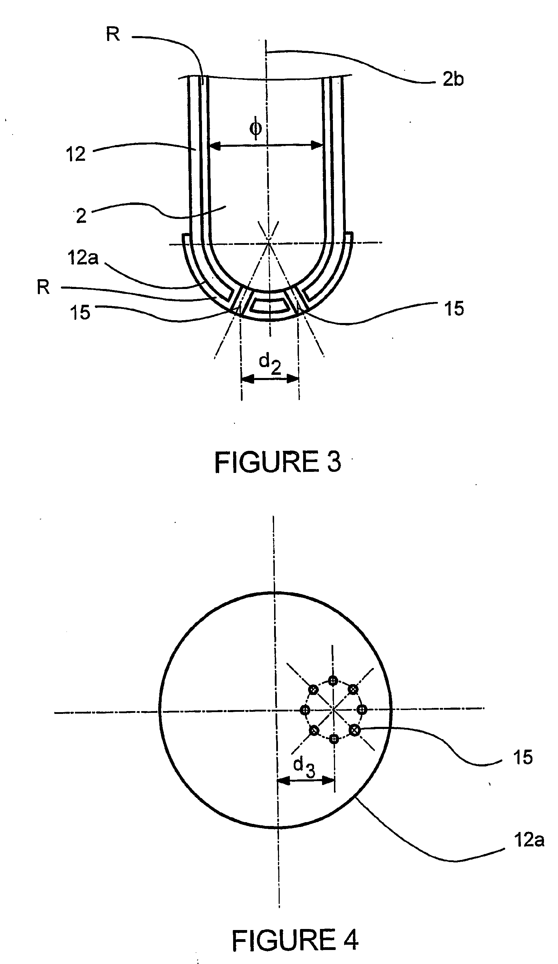

Le centre de ce cercle peut être sur l'axe de symétrie 2b de la préchambre 2, comme le montre la Figure 3.

Le centre de ce cercle peut également être situé à une distance d₃ de l'axe de symétrie 2b de la préchambre 2, comme le montre la Figure 4, sur laquelle des passages 15 au nombre de 8 ont été représentés.

On introduit un mélange air-carburant dans la chambre principale et on alimente la préchambre 2. On produit ensuite une étincelle entre les électrodes 13 et 14 en déclenchant ainsi la combustion dans la préchambre 2, de telle sorte que la température et la pression augmentent en son sein.

Sous l'effet de la pression plus élevée dans la préchambre 2 que dans la chambre principale 1, les flammes, ou les composés instables dans le cas ou la dimension des passages empêche la propagation du front de flamme, sont expulsés sous forme de jets vers la chambre principale 1. Ainsi le mélange principal contenu dans la chambre principale 1 est enflammé.

Dans les deux cas (allumage du mélange principal par convection du front de flamme ou par auto-inflammation), le revêtement réfractaire sur la paroi interne du corps de préchambre 12, sur la paroi externe de la tête 12a et sur les parois des passages 15 limite les transferts de chaleur des gaz en combustion vers le corps de préchambre 12, ce qui a pour effet d'augmenter considérablement l'efficacité de la combustion dans la préchambre 2.

On améliore ainsi le fonctionnement du moteur aux faibles charges et au ralenti.

## Revendications

1. Dispositif d'allumage d'un moteur à combustion interne, comprenant :
- une chambre principale (1) destinée à contenir un mélange combustible principal, et munie d'un système de compression dudit mélange, et
- un allumeur (11) comprenant une préchambre (2) destinée à recevoir des réactifs et un système d'allumage (13,14) des réactifs contenu dans la préchambre (2), ladite préchambre (2) étant définie par un corps de préchambre (12) ayant une tête (12a) comportant au moins un passage (15), ladite tête (12a) du corps de préchambre séparant la préchambre (2) de la chambre principale (1) et faisant communiquer la préchambre (2) et la chambre principale (1) par l'intermédiaire du ou des passages (15),
**caractérisé en ce que** la tête (12a) est revêtue au moins partiellement extérieurement d'un revêtement (R) d'au moins un matériau réfractaire.

2. Dispositif d'allumage selon la revendication 1 **caractérisé en ce que** le corps de préchambre (12) est revêtu au moins partiellement intérieurement d'un revêtement (R) d'au moins un matériau réfractaire.

3. Dispositif d'allumage selon la revendication 1 ou 2 **caractérisé en ce que** le ou les passages (15) sont revêtus d'un revêtement (R) d'au moins un matériau réfractaire.

4. Dispositif d'allumage selon la revendication 1, 2 ou 3 **caractérisé en ce que** le revêtement (R) est un revêtement nano-structuré, la taille des grains étant supérieure ou égale à 1 nm et inférieure à 1 000 nm.

5. Dispositif d'allumage selon l'une quelconque des revendications précédentes **caractérisé en ce que** le revêtement (R) consiste soit en une couche d'au moins un matériau réfractaire, soit en deux couches d'au moins un matériau réfractaire.

6. Dispositif d'allumage selon l'une quelconque des revendications précédentes **caractérisé en ce que** le ou les matériaux réfractaires sont choisis parmi les nitrures, les borures, les siliciures, les carbures, les alliages de zirconium, d'yttrium, de titane et de bore, les oxydes, de préférence les oxydes d'aluminium; de titane, de fer, de silicium, de cérium, de manganèse et de zirconium, et les zircones ayant subies l'addition d'au moins un oxyde métallique choisi parmi les oxydes de calcium, de magnésium, d'yttrium, de hafnium et de terres rares.

7. Dispositif d'allumage selon l'une quelconque des revendications précédentes **caractérisé en ce que** le ou les matériaux réfractaires sont choisis parmi Al₂O₃, SiO₂, CeO₂, MnO₂, ZrO₂, ZrY, Zr et Y étant dans des proportions stoechiométriques ou non, et TiB₂, de préférence parmi Al₂O₃, ZrY, Zr et Y étant dans des proportions stoechiométriques ou non, et TiB₂.

8. Dispositif d'allumage selon l'une quelconque des revendications précédentes **caractérisé en ce que** l'épaisseur du revêtement est comprise entre 0,5 et 100 µm, de préférence entre 1 et 50 µm.

9. Dispositif d'allumage selon l'une quelconque des revendications précédentes **caractérisé en ce que** le ou les passages (15) sont de forme cylindrique et de diamètre supérieur à 1 mm.

10. Dispositif d'allumage selon l'une quelconque des revendications 1 à 8 **caractérisé en ce que** le ou les passages (15) sont aptes à empêcher la propagation d'un front de flamme tout en permettant la propagation de composés instables provenant de la combustion des réactifs contenus dans la préchambre (2), le système de compression de la chambre principale (1) et l'ensemencement du mélange principal en lesdits composés instables permettant une auto-inflammation en masse du mélange principal.

11. Dispositif d'allumage selon la revendication 10 **caractérisé en ce que** le ou lesdits passages (15) ont la forme d'un cylindre de diamètre inférieur ou égal à 1 mm.

12. Dispositif d'allumage selon la revendication 10 ou 11 **caractérisé en ce que** le ou lesdits passages ont une longueur inférieure ou égale à leur diamètre.

13. Dispositif d'allumage selon la revendication 10, 11 ou 12
**caractérisé en ce que** :
- la partie supérieure du corps de préchambre (12) a la forme d'un cylindre de diamètre intérieur Φ, et
- la tête (12a) du corps de préchambre (12) comprend plusieurs passages (15), lesdits passages (15) étant circonscrits par une courbe circulaire de diamètre d₂ passant par les centres des passages (15) les plus extérieurs, le rapport d₂/Φ étant inférieur ou égal à 0,5.

14. Dispositif d'allumage selon la revendication précédente **caractérisé en ce que** le rapport d₂/Φ est inférieur ou égal à 1/3.

15. Dispositif d'allumage selon la revendication 13 ou 14 **caractérisé en ce que** le centre de la courbe passant par les centres des passages les plus extérieurs (15) est situé sur l'axe de symétrie (2b) de la préchambre (2).

16. Dispositif d'allumage selon la revendication 13 ou 14 **caractérisé en ce que** le centre de la courbe passant par les centres des passages les plus extérieurs est situé à une distance d₃ de l'axe de symétrie (2b) de la préchambre (2), ladite distance d₃ étant égale ou supérieure au quart du diamètre Φ de la préchambre (2).

17. Allumeur pour moteur à combustion interne comprenant une préchambre (2) définie par un corps de préchambre (12) ayant une tête (12a) munie d'au moins un passage (15), la préchambre étant destinée à contenir un mélange combustible, et un système d'allumage (13,14) du mélange combustible contenu dans la préchambre (2), **caractérisé en ce que** la tête (12a) est revêtue au moins partiellement extérieurement d'un revêtement (R) d'au moins un matériau réfractaire.

18. Allumeur selon la revendication 17 **caractérisé en ce que** le corps de préchambre (12) est revêtu au moins partiellement intérieurement d'un revêtement (R) d'au moins un matériau réfractaire.

19. Allumeur selon la revendication 17 ou 18 **caractérisé en ce que** le ou les passages (15) sont revêtus d'un revêtement d'au moins un matériau réfractaire.

20. Allumeur selon la revendication 17, 18 ou 19 **caractérisé en ce que** le ou les matériaux réfractaires sont choisis parmi les nitrures, les borures, les siliciures, les carbures, les alliages de zirconium, d'yttrium, de titane et de bore, les oxydes, de préférence les oxydes d'aluminium, de titane, de fer, de silicium, de cérium, de manganèse et de zirconium, et les zircones ayant subies l'addition d'au moins un oxyde métallique choisi parmi les oxydes de calcium, de magnésium, d'yttrium, de hafnium et de terres rares.

21. Allumeur selon la revendication 20 **caractérisé en ce que** le ou les matériaux réfractaires sont choisis parmi Al₂O₃, SiO₂, CeO₂, MnO₂, ZrO₂, ZrY, Zr et Y étant dans des proportions stoechiométriques ou non, et TiB₂ de préférence parmi Al₂O₃, ZrY, Zr et Y étant dans des proportions stoechiométriques ou non, et TiB₂.

22. Allumeur selon l'une quelconque des revendications 17 à 21 **caractérisé en ce que** l'épaisseur du revêtement est comprise entre 0,5 et 100 µm, de préférence entre 1 et 50 µm.

## Claims

1. Ignition device for an internal combustion engine, comprising:
- a main chamber (1) intended to contain a main combustion mixture, and provided with a compression system for the said mixture, and
- an igniter (11) comprising a pre-combustion chamber (2) intended to receive the reactive substances and an ignition system (13, 14) for the reactive substances contained in the pre-combustion chamber (2), with the said pre-combustion chamber (2) being defined by a pre-combustion chamber body (12) with a head (12a) comprising at least one passage (15), with the said head (12a) of the pre-combustion chamber body separating the pre-combustion chamber (2) from the main chamber (1) and linking the pre-combustion chamber (2) and the main chamber (1) by means of the passage or passages (15)
**characterised in that** the head (12a) has its exterior at least partially coated with a coating (R) of at least one refractory material.

2. Ignition device in accordance with Claim 1, **characterised in that** the interior of the body of the pre-combustion chamber (12) is at least partially coated with a coating (R) of at least one refractory material.

3. Ignition device in accordance with Claim 1 or 2, **characterised in that** the passage or passages (15) are at least partially coated with a coating (R) of at least one refractory material.

4. Ignition device in accordance with Claim 1, 2 or 3, **characterised in that** the coating (R) is a nano-structured coating, with the size of the grains being greater than or equal to 1 nm and smaller than 1,000 nm.

5. Ignition device in accordance with any of the previous claims, **characterised in that** the coating (R) consists either of one layer of at least one refractory material or of at least two layers of a refractory material.

6. Ignition device in accordance with any of the previous claims, **characterised in that** the refractory material or materials are chosen from the nitrides, borides, silicides, carbides, alloys of zirconium, yttrium, titanium and boron, oxides, preferably oxides of aluminium, titanium, iron, silicon, cerium, manganese and zirconium, and with the zirconium oxides having undergone the addition of at least one metallic oxide chosen from the oxides of calcium, magnesium, hafnium and the rare earths.

7. Ignition device in accordance with any of the previous claims, **characterised in that** the refractory material or materials are chosen from amongst Al₂O₃, SiO₂, CeO₂, MnO₂, ZrO₂, ZrY, with Zr and Y being in stoichiometric proportions or otherwise, and TiB₂, and preferably from Al₂O₃, ZrY, with Zr and Y being in stoichiometric proportions or otherwise, and TiB₂.

8. Ignition device in accordance with any of the previous claims, **characterised in that** the thickness of the coating is between 0.5 and 100 µm and preferably between 1 and 50 µm.

9. Ignition device in accordance with any of the previous claims, **characterised in that** the passage or passages (15) are of cylindrical form and have a diameter greater than 1 mm.

10. Ignition device in accordance with one of Claims 1 to 8, **characterised in that** the passage or passages (15) are capable of preventing the propagation of a flame front whilst allowing the propagation of unstable compounds originating from the combustion of the reactive substances contained in the pre-combustion chamber (2), with the compression system of the main chamber (1) and the spiking of the main mixture with the above-mentioned unstable compounds allowing a mass self-combustion of the main mixture.

11. Ignition device in accordance with Claim 10, **characterised in that** the above-mentioned passage or passages (15) have the form of a cylinder with a diameter less than or equal to 1 mm.

12. Ignition device in accordance with Claim 10 or 11, **characterised in that** the above-mentioned passage or passages have a length less than or equal to their diameter.

13. Ignition device in accordance with Claim 10, 11 or 12, **characterised in that**:
- the upper part of the body of the pre-combustion chamber (12) has the form of a cylinder with an internal diameter Φ**,** and
- the head (12a) of the body of the pre-combustion chamber (12) comprises several passages (15), with the aforesaid passages (15) being circumscribed by a circular curve of diameter d₂ passing through the centres of the outermost passages (15) and the ratio d₂/ Φ being less than or equal to 0.5.

14. Ignition device in accordance with the previous claim, **characterised in that** the ratio d₂/Φ is less than or equal to 1/3.

15. Ignition device in accordance with Claim 13 or 14, **characterised in that** the centre of the curve passing through the centres of the outermost passages (15) is situated on the axis of symmetry (2b) of the pre-combustion chamber (2).

16. Ignition device in accordance with Claim 13 or 14, **characterised in that** the centre of the curve passing through the centres of the outermost passages is situated at a distance d₃ from the axis of symmetry (2b) of the pre-combustion chamber (2), the aforesaid distance d₃ being equal to or greater than one quarter of the diameter Φ of the pre-combustion chamber (2).

17. Igniter for an internal combustion engine comprising a pre-combustion chamber (2) defined by the body of a pre-combustion chamber (12) with a head (12a) equipped with at least one passage (15), the pre-combustion chamber being intended to contain a combustible mixture, and an ignition system (13, 14) for the combustible mixture contained in the pre-combustion chamber (2), **characterised in that** the outside of the head (12a) is coated at least partially with a coating (R) of at least one refractory material.

18. Igniter in accordance with Claim 17, **characterised in that** the interior of the body of the pre-combustion chamber (12) is coated at least partially with a coating (R) of at least one refractory material.

19. Igniter in accordance with Claim 17 or 18, **characterised in that** the passage or passages (15) are coated with a coating of at least one refractory material.

20. Igniter in accordance with Claim 17, 18 or 19, **characterised in that** the refractory material or materials are chosen from nitrides, borides, silicides, carbides, alloys of zirconium, yttrium, titanium and boron, oxides, preferably oxides of aluminium, titanium, iron, silicon, cerium, manganese and zirconium, and with the zirconium oxides having undergone the addition of at least one metallic oxide chosen from the oxides of calcium, magnesium, yttrium, hafnium and the rare earths.

21. Igniter in accordance with Claim 20, **characterised in that** the refractory material or materials are chosen from Al₂O₃, SiO₂, CeO₂, MnO₂, ZrO₂, ZrY, with Zr and Y being in stoichiometric proportions or otherwise, and TiB₂, and preferably from Al₂O₃, ZrY, with Zr and Y being in stoichiometric proportions or otherwise, and TiB₂.

22. Igniter in accordance with any of the Claims 17 to 21, **characterised in that** the thickness of the coating is between 0.5 and 100 µm and preferably between 1 and 50 µm.

## Patentansprüche

1. Zündvorrichtung für einen Verbrennungsmotor, mit:
- einer Hauptkammer (1), die dazu bestimmt ist, ein Hauptbrennstoffgemisch zu enthalten, und die mit einer Einrichtung zum Verdichten des Gemischs versehen ist, und
- einem Zündverteiler (11) mit einer Vorkammer (2), die dazu bestimmt ist, Reaktanten aufzunehmen, und mit einer Einrichtung (13, 14) zum Zünden der in der Vorkammer (2) enthaltenen Reaktanten, wobei die Vorkammer (2) von einem Vorkammergehäuse (12) definiert wird, das einen Kopf (12a) mit zumindest einem Durchlass (15) aufweist, wobei der Kopf (12a) des Vorkammergehäuses die Vorkammer (2) von der Hauptkammer (1) trennt und die Vorkammer (2) mit der Hauptkammer (1) über den bzw. die Durchlässe (15) verbindet,
**dadurch gekennzeichnet, dass** der Kopf (12a) außen zumindest teilweise mit einer Beschichtung (R) aus zumindest einem feuerfesten Material beschichtet ist.

2. Zündvorrichtung nach Anspruch 1, **dadurch gekennzeichnet, dass** das Vorkammergehäuse (12) innen zumindest teilweise mit einer Beschichtung (R) aus zumindest einem feuerfesten Material beschichtet ist.

3. Zündvorrichtung nach Anspruch 1 oder 2, **dadurch gekennzeichnet, dass** der bzw. die Durchlässe (15) mit einer Beschichtung (R) aus zumindest einem feuerfesten Material beschichtet sind.

4. Zündvorrichtung nach Anspruch 1, 2 oder 3, **dadurch gekennzeichnet, dass** die Beschichtung (R) eine nanostrukturierte Beschichtung ist, wobei die Korngröße größer oder gleich 1 nm und kleiner als 1000 nm ist.

5. Zündvorrichtung nach einem der vorangehenden Ansprüche, **dadurch gekennzeichnet, dass** die Beschichtung (R) entweder aus einer Schicht aus zumindest einem feuerfesten Material oder aus zwei Schichten aus zumindest einem feuerfesten Material besteht.

6. Zündvorrichtung nach einem der vorangehenden Ansprüche, **dadurch gekennzeichnet, dass** das bzw. die feuerfesten Materialien ausgewählt sind aus Nitraten, Boriden, Siliciden, Karbiden, Zirkonium-, Yttrium-, Titan- und Bor-Legierungen, Oxiden, vorzugsweise Aluminium-, Titan-, Eisen-, Silizium-, Zerium-, Magnesium- und Zirkonium-Oxiden, wobei den Zirkoniumoxiden zumindest ein Metalloxid ausgewählt aus Kalzium- Magnesium-, Yttrium-, Hafnium-Oxiden und seltenen Erden zugesetzt wurde.

7. Zündvorrichtung nach einem der vorangehenden Ansprüche, **dadurch gekennzeichnet, dass** das bzw. die feuerfesten Materialien ausgewählt sind aus Al₂O₃, SiO₂, CeO₂, MnO₂, ZrO₂, ZrY, wobei Zr und Y in stöchiometrischen Anteilen vorliegen oder nicht, und TiB₂, vorzugsweise aus Al₂O₃, ZrY, wobei Zr und Y in stöchiometrischen Anteilen vorliegen oder nicht, und TiB₂.

8. Zündvorrichtung nach einem der vorangehenden Ansprüche, **dadurch gekennzeichnet, dass** die Dicke der Beschichtung zwischen 0,5 und 100 µm, vorzugsweise zwischen 1 und 50 µm beträgt.

9. Zündvorrichtung nach einem der vorangehenden Ansprüche, **dadurch gekennzeichnet, dass** der bzw. die Durchlässe (15) zylinderförmig sind und einen Durchmesser von über 1 mm haben.

10. Zündvorrichtung nach einem der vorangehenden Ansprüche, **dadurch gekennzeichnet, dass** der bzw. die Durchlässe (15) dazu geeignet sind, die Ausbreitung einer Flammenfront zu verhindern und dabei die Ausbreitung von instabilen Verbindungen gestatten, die von der Verbrennung der in der Vorkammer (2) enthaltenen Reaktanten stammen, wobei die Verdichtungseinrichtung der Hauptkammer (1) und das Versetzen des Hauptgemischs mit den instabilen Verbindungen eine Selbstentzündung des Hauptgemischs in Masse gestattet.

11. Zündvorrichtung nach Anspruch 10, **dadurch gekennzeichnet, dass** der bzw. die Durchlässe (15) die Form eines Zylinders mit einem Durchmesser kleiner oder gleich 1 mm haben.

12. Zündvorrichtung nach Anspruch 10 oder 11, **dadurch gekennzeichnet, dass** der bzw. die Durchlässe eine Länge kleiner oder gleich ihrem Durchmesser haben.

13. Zündvorrichtung nach Anspruch 10, 11 oder 12, **dadurch gekennzeichnet, dass**
- der obere Teil des Vorkammergehäuses (12) die Form eines Zylinders mit einem Innendurchmesser Φ hat, und
- der Kopf (12a) des Vorkammergehäuses (12) mehrere Durchlässe (15) enthält, wobei die Durchlässe (15) von einer kreisförmigen Kurve mit dem Durchmesser d₂ umschrieben werden, die durch die Mittelpunkte der äußersten Durchlässe (15) verläuft, wobei das Verhältnis d₂/Φ kleiner oder gleich 0,5 ist.

14. Zündvorrichtung nach dem vorangehenden Anspruch, **dadurch gekennzeichnet, dass** das Verhältnis d₂/Φ kleiner oder gleich 1/3 ist.

15. Zündvorrichtung nach Anspruch 13 oder 14, **dadurch gekennzeichnet, dass** der Mittelpunkt der Kurve, die durch die Mittelpunkte der äußersten Durchlässe (15) verläuft, auf der Symmetrieachse (2b) der Vorkammer (2) liegt.

16. Zündvorrichtung nach Anspruch 13 oder 14, **dadurch gekennzeichnet, dass** der Mittelpunkt der Kurve, die durch die Mittelpunkte der äußersten Durchlässe verläuft, in einem Abstand d₃ von der Symmetrieachse (2b) der Vorkammer (2) liegt, wobei der genannte Abstand d₃ gleich oder größer als ein Viertel des Durchmessers Φ der Vorkammer (2) ist.

17. Zündverteiler für einen Verbrennungsmotor mit einer Vorkammer (2), die von einem Vorkammergehäuse (12) definiert wird, das einen Kopf (12a) mit zumindest einem Durchlass (15) aufweist, wobei die Vorkammer dazu bestimmt ist, ein Brennstoffgemisch zu enthalten, und mit einer Einrichtung (13, 14) zum Zünden des in der Vorkammer (2) enthaltenen Brennstoffgemischs, **dadurch gekennzeichnet, dass** der Kopf (12a) außen zumindest teilweise mit einer Beschichtung (R) aus zumindest einem feuerfesten Material beschichtet ist.

18. Zündverteiler nach Anspruch 17, **dadurch gekennzeichnet, dass** das Vorkammergehäuse (12) innen zumindest teilweise mit einer Beschichtung (R) aus zumindest einem feuerfesten Material beschichtet ist.

19. Zündverteiler nach Anspruch 17 oder 18, **dadurch gekennzeichnet, dass** der bzw. die Durchlässe (15) mit einer Beschichtung aus zumindest einem feuerfesten Material beschichtet sind.

20. Zündverteiler nach Anspruch 17, 18 oder 19, **dadurch gekennzeichnet, dass** das bzw. die feuerfesten Materialien ausgewählt sind aus Nitraten, Boriden, Siliciden, Karbiden, Zirkonium-, Yttrium-, Titan- und Bor-Legierungen, Oxiden, vorzugsweise Aluminium-, Titan-, Eisen-, Silizium-, Zerium-, Magnesium- und Zirkonium-Oxiden, wobei den Zirkoniumoxiden zumindest ein Metalloxid ausgewählt aus Kalzium-Magnesium-, Yttrium-, Hafnium-Oxiden und seltenen Erden zugesetzt wurde.

21. Zündvorrichtung nach Anspruch 20, **dadurch gekennzeichnet, dass** das bzw. die feuerfesten Materialien ausgewählt sind aus Al₂O₃, SiO₂, CeO₂, MnO₂, ZrO₂, ZrY, wobei Zr und Y in stöchiometrischen Anteilen vorliegen oder nicht, und TiB₂, vorzugsweise aus Al₂O₃, ZrY, wobei Zr und Y in stöchiometrischen Anteilen vorliegen oder nicht, und TiB₂.

22. Zündverteiler nach einem der Ansprüche 17 bis 21, **dadurch gekennzeichnet, dass** die Dicke der Beschichtung zwischen 0,5 und 100 µm, vorzugsweise zwischen 1 und 50 µm beträgt.
